# FASCICULE DE BREVET EUROPEEN

(11) **EP 0 677 152 B1**
(45) Date de publication et mention de la délivrance du brevet: **05.11.1997**
(21) Numéro de dépôt: 94927704.0
(22) Date de dépôt: 20.09.1994
(51) Int. Cl.: F16D 13/50, F16D 13/58, F16B 41/00

(54) **MODULE D'EMBRAYAGE A VIS DE FIXATION INTEGREES, NOTAMMENT POUR VEHICULES AUTOMOBILES**
KUPPLUNGSMODUL MIT INTEGRIERTER BEFESTIGUNGSSCHRAUBE
CLUTCH MODULE WITH INTEGRATED SECURING SCREWS

(30) Priorité: 23.09.1993 FR 9311325
(43) Date de publication de la demande: 18.10.1995
(73) Titulaire: VALEO, 75017 Paris (FR)
(72) Inventeur: SEVENNEC, Yvon, . (FR); VIOLA, Paolo, F-75007 Paris (FR)
(74) Mandataire: Gamonal, Didier
(86) Numéro de dépôt international: FR9401098
(87) Numéro de publication internationale: WO9508724

(56) Documents cités:
- DE-A- 4 317 332
- DE-B- 1 204 888
- DE-U- 8 900 755
- FR-A- 2 688 840
- GB-A- 2 263 509

## Description

L'invention concerne les modules d'embrayage, notamment pour véhicules automobiles.

Ainsi qu'on le sait, un module d'embrayage comporte, de manière unitaire, un mécanisme d'embrayage, communément appelé "mécanisme" et formé en pratique d'un couvercle, d'un diaphragme et d'au moins un plateau de pression, une friction d'embrayage, et un plateau de réaction ou volant.

L'invention concerne plus particulièrement le cas où un tel module d'embrayage comporte, en sus, en attente au droit d'un perçage du volant, pour permettre de rapporter l'ensemble sur un arbre menant, au moins une, et en pratique plusieurs, vis de fixation.

Le problème est d'assurer axialement un maintien convenable de ces vis de fixation, d'une part pour éviter d'abord qu'elles ballottent intempestivement lors des manutentions, de qui serait inévitablement générateur d'un bruit inutile et susceptible d'être mal interprété, et ce qui pourrait surtout conduire de manière préjudiciable à un endommagement de leurs filets, et, d'autre part, et surtout, pour faciliter ensuite le montage.

Dans le document FR-A-2 662 767, conforme au préambule de la revendication 1 et qui concerne en fait un volant divisé, communément appelé double volant amortisseur, c'est-à-dire un volant formé de deux parties entre lesquelles intervient un amortisseur de torsion, le maintien des vis de fixation est, dans une forme de réalisation, assuré par insertion de leur tête i entre le diaphragme et une pièce annulaire élastique rapportée à cet effet sur la friction d'embrayage. En variante il est prévu que la pièce élastique maintient la vis, qui ainsi est solidaire de manière axialement débrayable de la friction.

Les vis de fixation ont nécessairement de ce fait une longueur non négligeable, puisque leur tête s'étend axialement au-delà de la friction par rapport au volant.

En outre la pièce élastique est une pièce supplémentaire en sorte que le maintien de la vis n'est pas aussi simple que souhaité.

Pour raccourcir ces vis de fixation on peut songer à faire en sorte que, en attente, leur tête s'étende entre le volant et la friction d'embrayage, ou, s'agissant d'un volant divisé, à prévoir un jonc sur la partie la plus interne d'un tel volant.

Mais, dans l'un et l'autre cas, le problème du maintien axial de ces vis de fixation de manière simple subsiste.

L'invention a pour objet un module d'embrayage dans lequel ce problème est résolu de manière particulièrement simple et efficace avec des vis de fixation de longueur relativement modérée.

Ce problème est résolu conformément à l'invention par la partie caractérisante de la revendication 1.

Grâce à cette disposition, qui a également pour avantage de convenir aussi bien au cas où le volant est un volant unitaire qu'au cas où il s'agit d'un volant divisé, le maintien axial des vis de fixation est de manière simple correctement assuré et leur longueur est modérée.

En outre, bien qu'ils restent avantageusement libres, leurs filets ne risquent pas d'être endommagés.

Il est ainsi avantageusement selon l'invention tiré un parti supplémentaire du ou des paliers dont est usuellement équipée une telle friction d'embrayage.

Ainsi le maintien axial des vis de fixation est assuré par simple frottement, et, à leur mise en oeuvre, il suffit d'agir en poussée sur elles pour qu'elles se dégagent des logements dans lesquels leur tête est emmanchée.

Les caractéristiques et avantages de l'invention ressortiront d'ailleurs de la description qui va suivre, à titre d'exemple, en référence aux dessins schématiques annexes sur lesquels :
la figure 1 est une vue en coupe axiale d'un module d'embrayage suivant l'invention ;
la figure 2 reprend à échelle supérieure le détail de la figure 1 repéré par un encart II sur cette figure 1 ;
la figure 3 est une vue partielle en coupe axiale analogue à celle de la figure 2, après élimination de la vis de fixation représentée sur celle-ci ;
la figure 4 est, à échelle inférieure, une vue en perspective de la pièce assurant le maintien axial de l'ensemble des vis de fixation.

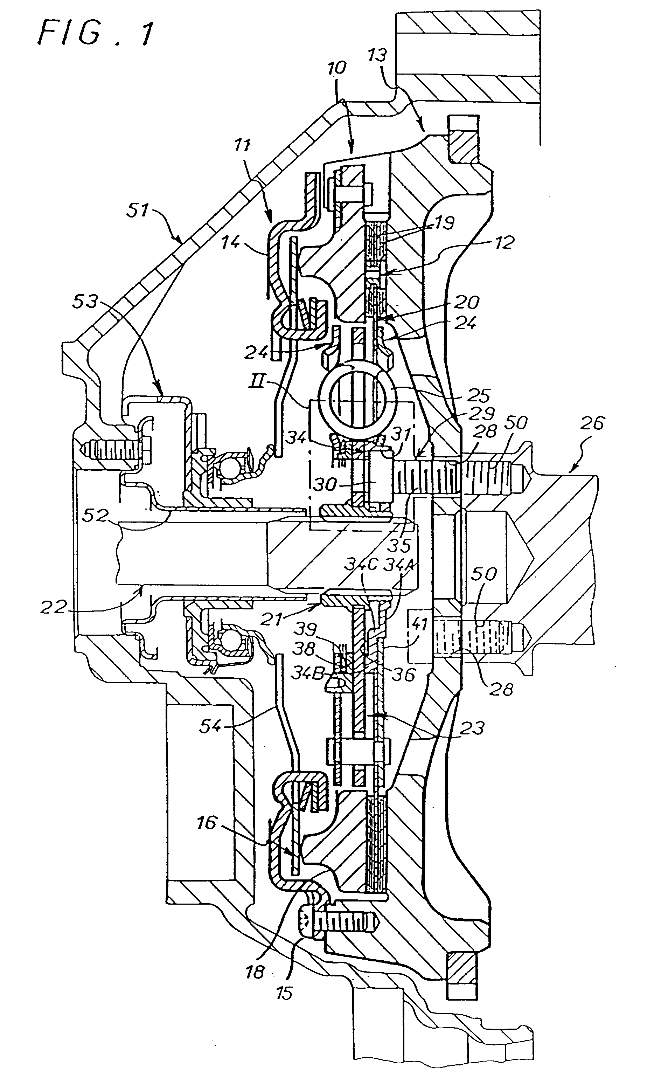

Globalement, et tel que représenté sur la figure 1, le module d'embrayage 10 suivant l'invention comporte, successivement axialement, de manière connue en soi, un mécanisme d'embrayage 11, une friction d'embrayage 12, et un plateau de réaction ou volant 13.

Le mécanisme d'embrayage 11 comporte, lui-même, successivement axialement, un couvercle 14, qui est rapporté ici par des vis 15 sur le volant 13, un diaphragme 16, qui prend appui sur le couvercle 14, et un plateau de pression 18, qui est solidaire en rotation du couvercle 14, et qui, sous la sollicitation du diaphragme 16, est apte à serrer contre le volant 13 les garnitures de frottement 19 du disque de friction 20 que comporte la friction d'embrayage 12.

Ici, la friction d'embrayage 12 est une friction à moyeu amortisseur.

Outre un moyeu 21, par lequel elle est adaptée à être calée en rotation sur un arbre mené 22, en l'espèce l'arbre de sortie d'une boîte de vitesses, et un voile de moyeu 23, qui est solidaire, ici par sertissage, du moyeu 21, elle comporte deux rondelles de guidage 24, qui s'étendent chacune respectivement de part et d'autre du voile de moyeu 23, et dont est solidaire le disque de friction 20, avec, interposés circonférentiellement entre le voile de moyeu 23 et ces rondelles de guidage 24, des moyens élastiques à action circonférentielle, ici des ressorts 25 du type ressort à boudin, dont chacun est individuellement logé pour partie dans une fenêtre du voile de moyeu 23 et pour partie dans des fenêtres des rondelles de guidage 24.

Ici, le disque de friction 20 est accolé à l'une des rondelles de guidage 24, et il est lié à celle-ci par des colonnettes reliant l'une à l'autre ces rondelles de guidage 24.

Pour pouvoir être rapporté sur un arbre menant 26, en l'espèce le vilebrequin d'un moteur à combustion interne, le module d'embrayage 10 comporte, également, en attente au droit d'un perçage 28 du volant 13, au moins une vis de fixation 29.

Ici, plusieurs vis de fixation 29 sont prévues, en étant réparties circulairement autour de l'axe de l'ensemble, et le volant 13 comporte autant de perçages 28.

Ici, les vis de fixation 29 sont des vis à tête cylindrique comportant axialement une empreinte telle que par exemple un six-pans creux.

En variante, il peut s'agir de vis à tête présentant diamétralement en surface une saignée.

Ici, le volant 13 est unitaire.

Mais il peut aussi bien s'agir d'un volant divisé, comme décrit par exemple dans le document FR-A-2 662 767.

Les vis de fixation 29 sont solidaires de manière axialement débrayable de la friction d'embrayage 12.

Ici, elles sont chacune individuellement emmanchées par leur tête 30 dans des logements 31 prévus à cet effet dans une pièce 34 appartenant à la friction d'embrayage 12, cependant que leur fût fileté 35 se trouve au moins partiellement engagé axialement dans le perçage 28 correspondant du volant 13. Sur les figures 1 à 4, la pièce 34 est une pièce annulaire qui, commune à toutes les vis de fixation 29, s'étend circulairement autour de l'axe de l'ensemble et forme un palier pour la friction d'embrayage 12, du côté de celle-ci tourné vers le volant 13.

Ici, la pièce 34 est radialement échelonnée en deux 5 parties 34A, 34B, qui, s'étendant l'une et l'autre globalement transversalement par rapport à l'axe de l'ensemble, sont décalées axialement l'une par rapport à l'autre, et qui se raccordent d'un seul tenant l'une à l'autre par une partie médiane de raccordement 34C cylindrique.

C'est par sa partie 34A radialement la plus interne que la pièce 34 forme un palier pour la friction d'embrayage 12, cette partie 34A s'étendant en continu entre, d'une part, la tranche de la périphérie interne de la rondelle de guidage 24 correspondante, et, d'autre part, la périphérie externe du moyeu 21.

Par sa partie 34B radialement la plus externe, la pièce 34 forme conjointement une rondelle de frottement pour la friction d'embrayage 12, cette partie 34B étant axialement insérée entre, d'une part, la rondelle de guidage 24 correspondante, et, d'autre part, le voile de moyeu 23.

Ici, pour limiter le frottement, cette partie 34B présente, du côté du voile de moyeu 23, un décrochement 36 qui s'étend à compter de son bord périphérique radialement le plus proche de l'axe de l'ensemble.

De manière classique, la friction d'embrayage 12 comporte, du côté opposé au volant 13, une autre rondelle de frottement 38, entre le voile de moyeu 23 et l'autre rondelle de guidage 24, et, ici, cette rondelle de frottement 38 est soumise à une rondelle Belleville 39 qui, prenant appui sur la rondelle de guidage 24, la sollicite en permanence en application contre le voile de moyeu 23.

Ici, les logements 31 que comporte la pièce 34 pour la tête 30 des vis de fixation 29 sont formés par des douilles 40 qui font saillie axialement sur cette pièce 34 du côté de celle-ci tourné vers le volant 13.

Les logements 31 s'étendent pour partie sur la partie 35A radialement la plus interne de la pièce 34 et pour partie sur sa partie 34B radialement la plus externe, à cheval sur ces deux parties 34A, 34B.

Ici, leur fond 42 est ajouré par une ouverture 43 dans sa partie centrale.

Pour ménager de la place au bourrelet de sertissage 44 que présente le moyeu 21 à la racine du voile de moyeu 23, la pièce 34 présente, le long de son bord périphérique radialement le plus proche de l'axe de l'ensemble, du côté du voile de moyeu 23, un décrochement 45, et il en résulte, localement, pour les logements 31, un ajour 46, à la jonction entre leur fond 42 et leur paroi latérale 47.

Ici, les logements 31 comportent intérieurement, sur leur paroi latérale 47, au moins une saillie 48, pour accentuer le frottement assurant le maintien axial des vis de fixation 29.

Il s'agit, par exemple, d'un simple bourrelet de section transversale triangulaire et symétrique, comme représenté.

Mais, en variante, il pourrait par exemple tout aussi bien s'agir d'un ou plusieurs crans échelonnés axialement et de section transversale triangulaire dissymétrique.

Ici, la saillie 48 s'étend annulairement en continu tout autour de l'axe des logements 31.

Mais, en variante, elle pourrait tout aussi bien être 25 discontinue.

Ici, les douilles 40 formant les logements 31 sont cylindriques.

Mais, en variante, elles pourraient tout aussi bien être par exemple tronconiques.

Ici, les douilles 40 sont circulairement continues sur toute leur hauteur.

Mais, en variante, elles pourraient par exemple tout aussi bien comporter axialement une ou plusieurs fentes sur une partie au moins de leur hauteur.

Quoi qu'il en soit, la pièce 34 est préférentiellement réalisée en matière synthétique, telle que par exemple de la matière plastique, et, le long de son bord périphérique radialement le plus proche de l'axe de l'ensemble, la rondelle de guidage 24 correspondante présente une découpe en feston complémentaire des douilles 40 qu'elle comporte. Cette rondelle de guidage 24 forme ainsi entre les 5 douilles 40 de la pièce 34 des languettes 41 qui assurent le blocage en rotation de celle-ci. Grâce par ailleurs à la réalisation en matière synthétique de la pièce 34, l'emmanchement par leur tête 30 des vis de fixation 29 dans les logements 31 se trouve facilité, cette pièce 34 présentant inévitablement de ce fait une certaine souplesse.

Enfin, le voile de moyeu 23 de la friction d'embrayage 12 comporte, échelonnés circulairement, au droit des logements 31 de la pièce 34, des ouvertures 49, au contour de l'ouverture 43 que présente le fond 42 de ces logements 31.

Au montage, c'est-à-dire lors de la fixation du module d'embrayage 10 sur l'arbre menant 26, les vis de fixation 29 sont dégagées par simple poussée axiale de leurs logements 31, à l'aide d'un outil passant par les ouvertures 49, 43 correspondantes.

Ces vis de fixation 29 passent dès lors de leur position d'attente, représentée en trait continu pour l'une d'elles sur la figure 1, à leur position de vissage pour laquelle, tel que schématisé en traits interrompus pour une autre d'entre elles sur cette figure 1, elles sont en prise avec des perçages taraudés 50 de l'arbre menant 26.

Comme schématisé en traits fins sur la figure 1, il est mis en place, ensuite, autour de l'axe de l'ensemble, après la fixation du module d'embrayage 10 sur l'arbre menant 26, un 30 carter 51 portant un manchon 52 sur lequel est montée coulissante la butée de débrayage 53 destinée à agir sur l'extrémité des doigts 54 du diaphragme 16.

La présente invention ne se limite d'ailleurs pas aux formes de réalisation décrites et représentées, mais englobe toute variante d'exécution.

En particulier, le voile de moyeu 23 peut être d'un seul tenant avec le moyeu 21, ce qui permet de simplifier la pièce 34, plus aucun décrochement n'étant nécessaire sur celle-ci pour le bourrelet de sertissage 44 normalement présent à leur jonction dans le cas d'une réalisation en deux parties.

De même, il peut être prévu deux plateaux de pression pour une même friction d'embrayage comportant alors deux disques de friction, comme décrit par exemple dans le document FR-A-2 628 492.

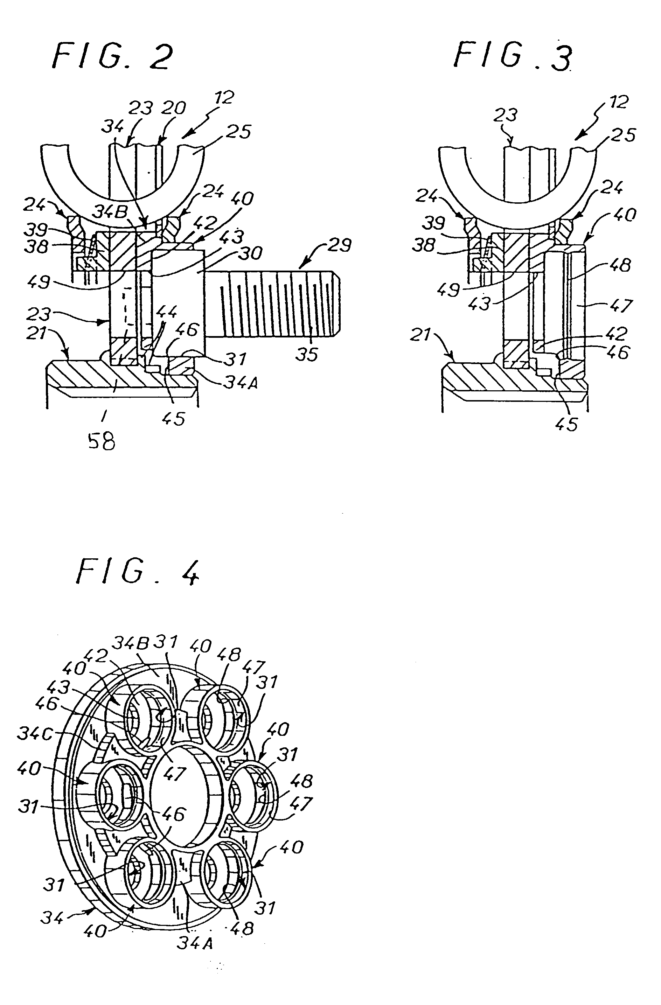

Tel que schématisé en traits interrompus sur la figure 4, la tête 30 des vis de fixation 29 peut présenter en saillie un embout 58, de taille réduite et propre à sa commande en rotation, cet embout 58 formant par exemple un six-pans extérieur.

## Revendications

1. Module d'embrayage, du genre comportant un mécanisme d'embrayage (11), une friction d'embrayage (12), un volant (13), et, en attente au droit d'un perçage (28) du volant (13), pour permettre de rapporter l'ensemble sur un arbre menant (26), au moins une vis de fixation (29, solidaire de manière axialement débrayable de la friction d'embrayage (12), caractérisé en ce que la vis de fixation (29) est emmanchée par sa tête (30) dans un logement (31) prévu à cet effet dans une pièce (34, 34') annulaire qui, s'étendant autour de l'axe de l'ensemble, forme un palier pour la friction d'embrayage (12) et appartient à celle-ci.

2. Module d'embrayage suivant la revendication 1, caractérisé en ce que ladite pièce (34) forme un palier par sa partie (34A) radialement la plus interne et une rondelle de frottement par sa partie (34B) radialement la plus externe.

3. Module d'embrayage suivant la revendication 2, caractérisé en ce que le logement (31) que comporte ladite pièce (34) pour la tête (30) de la vis de fixation (29) est formé par une douille (40) qui fait saillie axialement sur ladite pièce (34).

4. Module d'embrayage suivant la revendication 3, caractérisé en ce que ledit logement (31) s'étend pour partie sur la partie (34A) radialement la plus interne de ladite pièce (34) et pour partie sur sa partie (34B) radialement la plus externe.

5. Module d'embrayage suivant la revendication 4, caractérisé en ce que le fond (42) dudit logement (31) est ajouré par une ouverture (43) dans sa partie centrale.

6. Module d'embrayage suivant l'une quelconque des revendications 1 à 5, caractérisé en ce que ledit logement (31) comporte intérieurement au moins une saillie (48) pour accentuer le maintien axial de la vis de fixation (29).

7. Module d'embrayage suivant l'une quelconque des revendications 1 à 6, caractérisé en ce que ladite pièce (34) est en matière synthétique.

8. Module d'embrayage suivant l'une quelconque des revendications 1 à 7, caractérisé en ce qu'il y a plusieurs vis de fixation (29) réparties circulairement autour de l'axe de l'ensemble.

9. Module d'embrayage suivant la revendication 8, caractérisé en ce que la pièce (34) est commune à toutes les vis de fixations (29).

## Patentansprüche

1. Kupplungsmodul, umfassend einen Kupplungsmechanismus (11), eine Reibungskupplungsscheibe (12), ein Schwungrad (13) und, in Wartestellung in Höhe einer Bohrung (28) des Schwungrads (13), mindestens eine axial ausrückbar fest mit der Reibungskupplungsscheibe (12) verbundene Befestigungsschraube (29), um die Anbringung der Baueinheit an einer treibenden Welle (26) zu ermöglichen , **dadurch gekennzeichnet,** daß die Befestigungsschraube (29) mit ihrem Kopf (30) in eine Aufnahme (31) eingesteckt ist, die dazu in einem ringförmigen Element (34, 34') vorgesehen ist, das sich um die Achse der Baueinheit herum erstreckt, wobei es ein Lager für die Reibungskupplungsscheibe (12) bildet, zu der es gehört.

2. Kupplungsmodul nach Anspruch 1 , **dadurch gekennzeichnet,** daß das besagte Element (34) durch seinen radial am weitesten innen befindlichen Teil (34A) ein Lager und durch seinen radial am weitesten außen befindlichen Teil (34B) eine Reibscheibe bildet.

3. Kupplungsmodul nach Anspruch 2 , **dadurch gekennzeichnet,** daß die Aufnahme (31), die das besagte Element (34) für den Kopf (30) der Befestigungsschraube (29) umfaßt, durch eine Hülse (40) gebildet wird, die axial an dem besagten Element (34) vorsteht.

4. Kupplungsmodul nach Anspruch 3, **dadurch gekennzeichnet,** daß sich die besagte Aufnahme (31) teilweise auf dem radial am weitesten innen befindlichen Teil (34A) des besagten Elements (34) und teilweise auf seinem radial am weitesten außen befindlichen Teil (34B) erstreckt.

5. Kupplungsmodul nach Anspruch 4 , **dadurch gekennzeichnet,**, daß der Boden (42) der besagten Aufnahme (31) eine Öffnung (43) in seinem Mittelteil aufweist.

6. Kupplungsmodul nach einem der Ansprüche 1 bis 5, **dadurch gekennzeichnet,** daß die besagte Aufnahme (31) innen mindestens einen Vorsprung (48) umfaßt, um den axialen Halt der Befestigungsschraube (29) zu verstärken.

7. Kupplungsmodul nach einem der Ansprüche 1 bis 6, **dadurch gekennzeichnet,** daß das besagte Element (34) aus Kunststoff ausgeführt ist.

8. Kupplungsmodul nach einem der Ansprüche 1 bis 7, **dadurch gekennzeichnet,** daß es mehrere Befestigungsschrauben (29) gibt, die sich kreisförmig um die Achse der Baueinheit verteilen.

9. Kupplungsmodul nach Anspruch 8 , **dadurch gekennzeichnet,** daß das Element (34) für alle Befestigungsschrauben (29) gemeinsam vorgesehen ist.

## Claims

1. A clutch module, of the kind comprising a clutch mechanism (11), a clutch friction wheel (12), a flywheel (13), and, in a waiting position in line with a hole (28) in the flywheel (13) so as to enable the assembly to be fitted on a driving shaft (26), at least one fastening stud (29) secured to the clutch friction wheel (12) in an axially disengageable manner,
characterised in that the fastening stud (29) is fitted by means of its head (30) into a seating (31) provided for this purpose in an annular member (34, 34') which, extending around the axis of the assembly, defines a bearing for the clutch friction wheel (12), and which is part of the latter.

2. A clutch module according to Claim 1, characterised in that the said member (34) defines a bearing by virtue of its radially innermost portion (34A), and a friction ring by virtue of its radially outermost portion (34B).

3. A clutch module according to Claim 2, characterised in that the seating (31) which is comprised in the said member (34) for accommodation of the head (30) of the fastening stud (29) is defined by a bush (40) which projects axially from the said member (34).

4. A clutch module according to Claim 3, characterised in that the said seating (31) extends partly over the radially innermost portion (34A) of the said member (34), and partly over its radially outermost portion (34B).

5. A clutch module according to Claim 4, characterised in that the base (42) of the said seating (31) is open through an aperture (43) in its central portion.

6. A clutch module according to any one of Claims 1 to 5, characterised in that the said seating (31) has at least one internal projection (48) for increasing the axial retention of the fastening stud (29).

7. A clutch module according to any one of Claims 1 to 6, characterised in that the said member (34) is of a synthetic material.

8. A clutch module according to any one of Claims 1 to 7, characterised in that there are a plurality of fastening studs (29) arranged in a circle around the axis of the assembly.

9. A clutch module according to Claim 8, characterised in that the member (34) is common to all of the fastening studs (29).
